# FASCICULE DE BREVET EUROPEEN

(11) **EP 2 404 532 B1**
(45) Date de publication et mention de la délivrance du brevet: **07.08.2013**
(21) Numéro de dépôt: 11172800.2
(22) Date de dépôt: 06.07.2011
(51) Int. Cl.: A47J 27/022

(54) **Article culinaire à empreinte en V ou en U**
Küchenartikel in V- oder U-Form
Cooking utensil with V-shaped or U-shaped indentation

(30) Priorité: 09.07.2010 FR 1055642
(43) Date de publication de la demande: 11.01.2012
(73) Titulaire: SEB SA, 69130 Ecully (FR)
(72) Inventeur: Brasset, Jean-François, 74000 Annecy (FR)
(74) Mandataire: Novagraaf Technologies

(56) Documents cités:
- EP-A1- 0 970 647
- DE-U1- 9 320 248
- FR-A1- 2 919 484
- FR-A2- 2 667 496

## Description

La présente invention concerne un articule culinaire tel qu'une poêle, une sauteuse, une casserole ou un faitout...

On connaît un article culinaire du type dont la paroi de fond comprend une surface supérieure uniforme et une surface inférieure comportant des empreintes concaves. Le document FR 2 667 496 décrit un tel article dont les empreintes concaves sont principalement des rainures radiales. Ces empreintes permettent de réduire la déformation de la paroi de fond.

Cependant, il s'avère qu'après un certain temps, les utilisations successives pour cuire des aliments entraînent une déformation de la paroi de fond qui se bombe vers le bas, sous l'effet notamment de la pesanteur.

Une autre solution connue pour réduire la déformation du fond est le fait de réaliser une paroi de fond bombée vers le haut. Cependant, l'inconvénient majeur est que la face supérieure de la paroi de fond est trop irrégulière et la matière grasse fondue (huile, beurre...) se concentre à la périphérie de cette paroi.

Ce nouvel inconvénient peut être réduit en limitant la déformation initiale de la paroi de fond vers le haut. Dans ce cas, après quelques utilisations à la chaleur, la paroi de fond perd son aspect bombé vers le haut et se déforme en se bombant vers le bas.

EP 0 970 647 divulgue par ailleurs un article culinaire dont la paroi de fond comprend une surface supérieure uniforme et une surface inférieure comportant au contraire notamment une empreinte concave (donc non traversante) unique à branches radiales constituée (en ce qu'elles forment donc un tout) des branches radiales 7 toutes reliées entre elles par la branche centrale 4 continue, circulaire qui fait ainsi communiquer entre elles toutes les branches radiales.

Une telle réalisation nécessite l'utilisation d'une matrice d'empreinte assez complexe et une disposition précise par rapport au centre de la paroi à marquer.

De plus, l'empreinte est située essentiellement prêt/à proximité du centre C du fond, ce fond étant bien sûr la partie centrale limitée périphériquement par la ligne périmétrique P à partir de laquelle le fond remonte pour devenir paroi latérale. Ni ceci, ni la réalisation divulguée à ce brevet ne sont favorables au contrôle de la déformation dans le temps.

Quant à FR 2 919 484, y est divulgué un article culinaire dont la paroi de fond comprend une surface supérieure uniforme et une surface inférieure comportant non pas une ou plusieurs des empreintes concaves vides, mais des empreintes au moins pour certaines en partie en forme d'étoile à branches radiales réunies toutes ensembles, soit par un disque ou une forme centrale qui peut être percée, soit à nouveau et relativement à proximité radiale du centre du fond, par une branche circulaire continue.

La présente invention vise à réaliser un article culinaire améliorant la tenue à la déformation de la paroi de fond, immédiat et dans le temps, sans avoir une paroi de fond trop bombée vers le haut qui entrainerait une localisation trop restreinte de la matière grasse fondue.

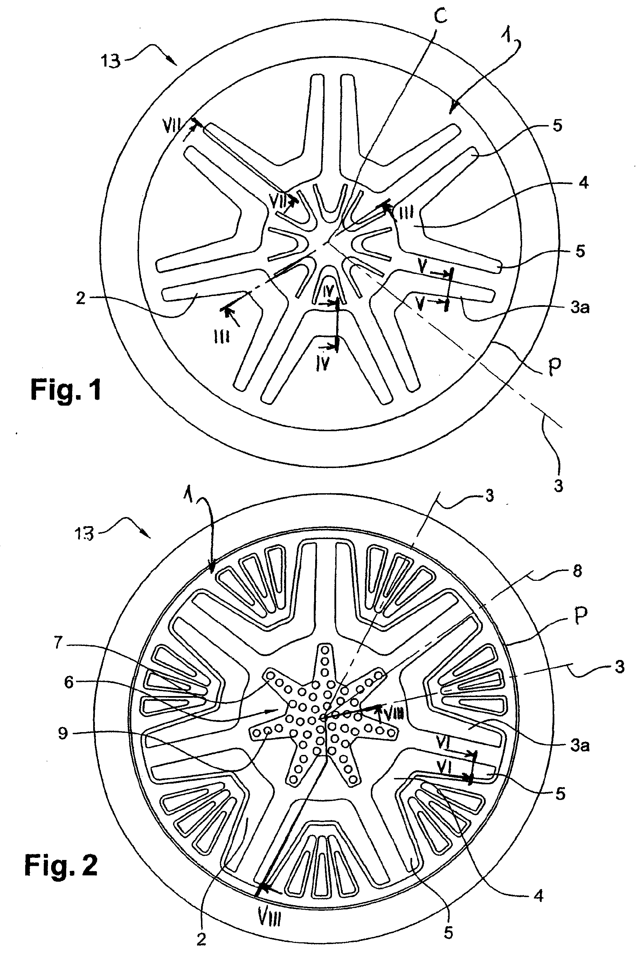

Selon l'invention, dans l'article culinaire du type précité, plusieurs empreintes concaves sont prévues dans le fond et chaque empreinte est constituée (c'est-à-dire, conformément au sens commun de ce terme : « comprend exclusivement ») de deux branches radiales et d'une branche centrale reliant les deux branches radiales. Ainsi, chaque empreinte a (en vue de face comme figures 1, 2) la forme générale d'un U ou d'un V selon la longueur de la branche centrale.

Il s'avère que l'utilisation d'empreinte en forme de U ou en V au lieu d'empreinte en I permet à l'article culinaire de tenir un plus grand nombre de cycle de chauffe et de refroidissement avant de subir des déformations, sans que la planéité de la surface supérieure de la paroi de fond ne gène la répartition de la matière grasse fondue.

D'autres particularités et avantages de la présente invention apparaîtront dans deux modes de réalisation donnés à titre d'exemples non limitatifs et illustrés par les dessins mis en annexe dans lesquels :
La figure 1 est une vue de la surface inférieure de la paroi de fond d'une poêle conforme à un premier mode de réalisation ; et
La figure 2 est une vue de la surface inférieure de la paroi de fond d'une poêle conforme à un second mode de réalisation.
Les figures 3,4,5,6,7,8 sont des coupes correspondant respectivement aux lignes de coupe III-III,IV-IV,V-V,VI-VI,VII-VII,VIII-VIII.
Les figures 1 et 2 représentent la surface inférieure 1 de la paroi de fond d'une poêle.

Afin d'obtenir une bonne répartition de la matière grasse sur cette paroi, la surface supérieure 10 de cette dernière est uniforme. Ainsi, elle ne présente pas de variations contrairement à la surface inférieure 1 ; Elle n'est pas trouée ni creusée d'empreintes ou d'autres creux gênant le libre glissement d'une spatule sur cette surface 10. Elle peut présenter de petites aspérités comme celles d'un revêtement PTFE (polytétrafluoroéthylène).

Ainsi, la surface supérieure uniforme 10 sera de préférence celle d'une couche antiadhésive 11 (telle du PTFE) qui recouvre une paroi concave en forme de calotte 12. La surface 10 reçoit les aliments placés dans l'article culinaire 13 ici concerné.

La paroi 12 est a priori métallique. On conseille un métal mou, tel de l'aluminium.

Au contraire de la surface 10, la surface inférieure 1 de la paroi de fond (précisément celle de la paroi 12) comporte des empreintes concaves 2, chacune constituée de deux branches radiales 3a et d'une branche centrale 4 reliant les deux branches radiales 3a. Chaque empreinte 2 ne comprend donc que ces branches 3a et 4.

La surface inférieure 1 est celle qui est placée sur la source de chaleur 15 retenue pour chauffer l'article culinaire 13 (plaque gaz par exemple).

Comme on l'a compris, chaque empreinte 2 est vide de matière ; Il n'a pas d'insert 6 dedans (voir insert 6 ci-après).

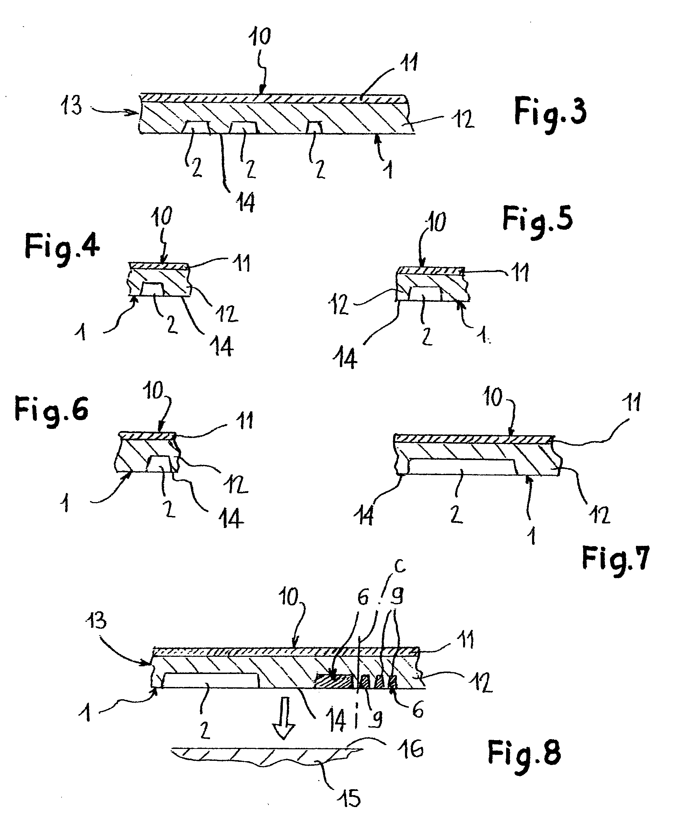

En comparant les figures 1-8, on a par ailleurs la confirmation que chaque empreinte concave 2 (qui est donc totalement disjointe des autres) est entourée entièrement par une zone 14 non creusée de la surface 1 qui s'étend uniformément à un même niveau autour de chaque empreinte. De manière complémentaire, on a aussi la confirmation que cette zone 14 non creusée, qui s'étend périmétriquement autour desdites empreintes 2, définit de façon générale une surface d'appui sur une surface plane 16, ceci pour la surface inférieure 1.

Par ailleurs, chaque empreinte présente un axe de symétrie 3 passant par le centre de la branche centrale 4. Cet axe 3 est orienté radialement. Dans le présent mode de réalisation, la branche centrale 4, d'une part, est une branche en arc de cercle dont le centre est le centre de la paroi de fond, et, d'autre part, est orientée en direction du centre de la paroi de fond. L'extrémité libre 5 des deux branches radiales est orientée en direction de la périphérie de la paroi de fond. Comme illustré aux figures 1 et 2, les empreintes 2 sont, de préférence, disposées à la partie périphérique de la paroi de fond.

Ainsi, pour la stabilité recherchée du fond, dans le temps, chaque empreinte 2 s'étend ici radialement jusque plus près de la limite périphérique extérieure P du fond que du centre C de ce fond.

Dans les présents modes de réalisation, la largeur de la branche centrale 4 est différente de celle de l'extrémité libre 5 de chaque branche radiale 3a. De préférence, la branche centrale 4 est plus large que les extrémités libres 5. Egalement de préférence, la largeur de la branche centrale 4 est au plus quatre fois celle des extrémités libres 5. Une répartition optimum est un rapport du simple au double, avec une largeur de la branche centrale 4 de 10 mm et celle des extrémités libres 5 de 5 mm.

Afin de limiter encore davantage des déformations de flexion de la paroi de fond, on recommande que la surface inférieure 1 présente un nombre impair d'empreintes 2 (au moins trois) régulièrement réparties en couronne (ici, il y a sept empreintes 2). Le nombre d'empreinte 2 dépend du diamètre de l'article culinaire : on conseille trois pour un diamètre de fond inférieur à 100 mm ; cinq pour un diamètre inférieur à 150 mm ; sept pour un diamètre inférieur à 250 mm ; et neuf au-delà.

De préférence, la paroi de fond est réalisée en aluminium, pris dans les familles 1000, 3000, 4000 ou 5000. Son épaisseur est de préférence comprise entre 2 et 5 mm, et la profondeur de chaque empreinte 2 est comprise entre 0,2 et 1 mm. En tout état de cause aucune empreinte ne traverse pas la paroi de fond.

Le fait d'avoir une paroi de fond réalisée en 1000, 3000, 4000 ou 5000, ayant une épaisseur comprise entre 2 et 5 mm, dans la paroi inférieure de laquelle sont réalisées des empreintes 2 en forme de U ou de V permet de limiter fortement la déformation de la paroi de fond sans devoir réaliser une déformation initiale en sens inverse importante.

Dans les présents modes de réalisation, les empreintes sont réalisées par frappe : un disque d'aluminium (destiné à devenir la paroi de fond) est disposé entre un poinçon et une matrice sur une presse. L'article culinaire est réalisé par emboutissage du disque en aluminium après matriçage des empreintes 2.

Dans le second mode de réalisation, un insert 6 est fixé au centre de la surface inférieure 1 de la paroi de fond. L'insert 6 a une forme d'étoile. Il est de préférence en cuivre ou en acier inoxydable austénitique, et a une épaisseur comprise entre 0,2 et 0,8 mm.

L'emploi d'un tel insert avec des empreintes (sans insert donc, ici vides de matière) en forme de U ou de V permet d'orienter la déformation de la paroi de fond en bombant cette dernière vers le haut. Les empreintes 2 limitent l'amplitude de la déformation de la paroi de fond, et la présence de l'insert dont le métal (cuivre ou acier inoxydable austénitique) est différent de celui de la paroi de fond (aluminium) permet d'orienter cette déformation grâce à la différence des coefficients de dilatation des deux matériaux.

Chaque branche 7 définissant la forme en étoile de l'insert 6 présente un axe de symétrie 8 orienté radialement.

De préférence, le nombre de branches 7 est égal au nombre d'empreinte 2. Dans ce cas, il est préférable que les axes 3 des empreintes 2 forment les bissectrices des axes 8 des branches 7, comme illustré à la figure 2.

Dans le second mode de réalisation, l'insert 6 est fixé par frappe, lors de la même opération de frappe des empreintes 2. Afin d'améliorer sa tenue, l'insert 6 comprend des orifices d'accroche 9.

Le procédé de réalisation d'un article culinaire conforme à la présente invention peut se faire en suivant les étapes suivantes : frappe des empreintes 2 et éventuellement de l'insert 6 sur un disque, emboutissage pour la mise en forme de l'article, application des différents revêtements (émail, antiadhésif...), et finition de l'article.

Une variante est de revêtir le disque avec les revêtements antiadhésifs (éventuellement sur les deux faces), puis de frapper les empreintes 2 et éventuellement de l'insert 6, ensuite de mettre en forme l'article par emboutissage, et enfin de réaliser l'étape de finition.

Ci-dessous des tests comparatifs de vieillissement réalisés selon des normes internes au demandeur permettent de comparer la tenue des différentes poêles. Les mesures de la déformation du fond sont toutes réalisées après 25 cycles de chauffe à 220°C et refroidissement.

Concernant les gammes préexistantes :
- avec « Essencia » à face inférieure lisse (donc dépourvue toute empreinte, vide ou remplie), la déformation est de 0,09 mm vers le bas ;
- avec « Evidence » également à face inférieure lisse, la déformation est de 0,37 mm vers le bas ;
- avec « Elégance » à face inférieure avec des empreintes en forme de I (en vue de face), la déformation est de 0,04 mm vers le bas ; et
- avec « Performance » à face inférieure présentant une grille en cuivre frappée en son centre, conformément à ce qui est prévu dans FR 2 919 484, la déformation est de 0,24 mm vers le haut.

Concernant les gammes conformes à la présente invention :
- sur un fond avec des empreintes en U (en vue de face), sans insert, la déformation est de 0,09 mm vers le haut ;
- sur un fond avec des empreintes en U (en vue de face), avec un insert en forme de disque, la déformation est de 0,11 mm vers le haut ;
- sur un fond avec des empreintes en U (en vue de face), avec un insert plein en forme d'étoile, la déformation est de 0,14 mm vers le haut ; et
- sur un fond avec des empreintes en U (en vue de face), avec un insert ajouré en forme d'étoile, la déformation est de 0,13 mm vers le haut.

Ainsi, dans les gammes « Essencia », « Evidence » et « Elégance », la paroi de fond se bombe rapidement vers le bas (ce qui rend rapidement la poêle inutilisable du fait de son faible contact avec la surface de chauffe) ; et dans la gamme « Performance », la paroi de fond se bombe trop vers le haut (ce qui entraîne une concentration de la matière grasse à la périphérie).

Au contraire, dans les gammes conformes à la présente invention, d'une part, la paroi de fond ne s'affaisse pas, et, d'autre part, la déformation vers le haut reste faible (environ moitié moins qu'avec la gamme « Performance ») ce qui permet d'avoir une répartition relativement homogène de la matière grasse.

La présente invention n'est pas limitée aux deux modes de réalisations exposés ci-avant. Ainsi, les empreintes en U ou en V pourraient être régulièrement réparties en couronne sous forme de série d'empreintes : les séries étant régulièrement réparties en couronne, et chaque série comprenant plusieurs empreintes empilées l'une dans l'autre et présentant le même axe de symétrie, par exemple une première empreinte disposée dans le logement défini par les trois branches d'une deuxième empreinte elle-même disposée dans le logement défini par les trois branches d'une troisième empreinte.

Des essais de comportements comparés ont été menées. On les présente ci-après :

| Tests menés successivement | Articles selon FR-A-2919484 (GV3) | Articles revendiqués (GV4) |
|---|---|---|
| Concavité initiale du fond | 0,59D% | 0,63D% |
| Concavité à Chaud 1 (huile dans le fond de l'article à 180°C) | 0,72D% | 0,77D% |
| Retour à froid (t° ambiante) 1 | 0,64D% | 0,66D% |
| Concavité Chocs Thermiques (25 chocs à 220°C en moyenne) | 0,70D% | 0,72D% |
| Concavité à Chaud 2(à nouveau huile dedans à 180°C) | 0,82D% | 0,83D% |
| Retour à froid (t° ambiante) 2 | 0,69D% | 0,72D% |
| Ecart Performances | 15% | 7% |
| Temps d'homogénéisation du fond (en secondes) (*) | 69s | 61s |
| Température maxi pour homogénéiser la t° à l'endroit du fond (en °C) (*) | 262°C | 246°C |

| | | |
|---|---|---|
| D est le diamètre de référence (à froid) du fond de l'article concerné. (*) voir norme EN 12 983-2. | | |

Résultats illustrés :

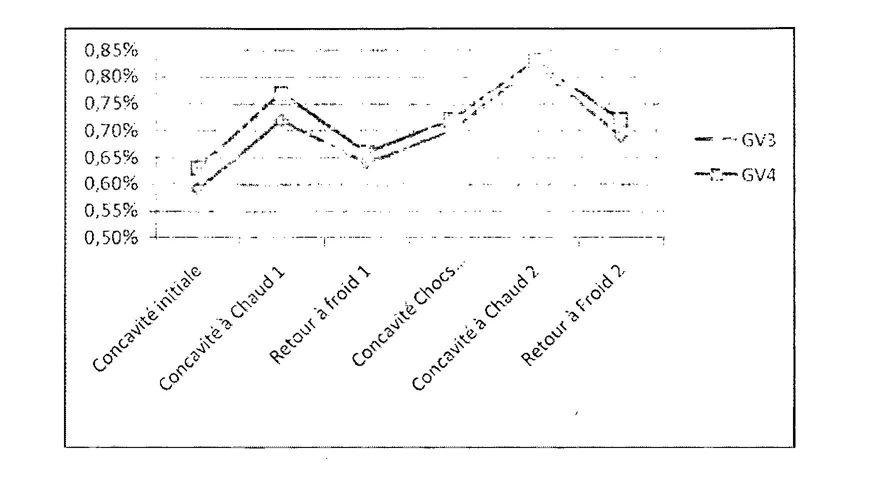

Conclusions :
Les deux types d'articles présentent chacun un fond ayant en moyenne la même concavité initiale et le même comportement en déformation à chaud (après vieillissement).

La concavité avec les fonds GV3 est, lors de ces essais, à peine inférieure à celles des fonds GV4 testés. Néanmoins, après la première chauffe et les chocs thermiques, l'écart se ressert encore.

Surtout, le fond GV3 vieillit moins bien que celui GV4 (déformation du fond comparée avant et après lesdits chocs thermiques). De plus le comportement thermique (temps Homogénéisation et Température Maxi pour homogénéiser la température à l'endroit du fond) est meilleur avec les articles GV4.

NOTA : Les tests comme ci-dessus en utilisant, à la place de GV3, un fond d'article culinaire conforme à EP-A-970647, les résultats n'ont pas été meilleurs qu'avec ceux de FR-A-2919484.

## Revendications

1. Article culinaire présentant une paroi de fond ayant une surface supérieure uniforme et une surface inférieure (1) comportant des empreintes concaves (2), **caractérisé en ce que** chaque empreinte (2) est constituée de deux branches radiales (3a) et d'une branche centrale (4) reliant les deux branches radiales (3a), chaque empreinte ayant ainsi la forme générale d'un U ou d'un V selon la longueur de la branche centrale.

2. Article culinaire présentant une paroi de fond ayant une surface supérieure uniforme et une surface inférieure (1) comportant des empreintes concaves (2) sans insert dedans, **caractérisé en ce que** chaque empreinte (2) est disjointe des autres et comprend exclusivement deux branches radiales (3a) et une branche centrale (4) reliant les deux branches radiales (3a).

3. Article culinaire selon la revendication 1 ou 2, **caractérisé en ce que** chaque empreinte (2) est disjointe des autres et est entourée entièrement par une zone non creusée (14) de la surface inférieure (1) qui
- définit, pour cette surface inférieure (1), une surface d'appui sur une surface (16) sous-jacente s'étendant dans un plan, et/ou
- s'étend uniformément à un même niveau autour de ladite empreinte (2).

4. Article culinaire selon l'une au moins des revendications précédentes, **caractérisé en ce que** la branche centrale (4) est une branche en arc de cercle dont le centre est le centre de la paroi de fond, et/ou la branche centrale (4) de chaque empreinte (2) est disjointe des autres et est orientée en direction du centre de la paroi de fond.

5. Article culinaire selon l'une au moins des revendications précédentes, **caractérisé en ce que** chaque empreinte (2) est disjointe des autres et présente un axe de symétrie (3) radial passant par le centre de la branche centrale (4).

6. Article culinaire selon l'une au moins des revendications 1 à 5, **caractérisé en ce que** la largeur de la branche centrale (4) est différente de celle de l'extrémité libre (5) des deux branches radiales (3a), et la largeur de la branche centrale (4) est supérieure à celle des extrémités libres (5), et est au plus quatre fois plus large.

7. Article selon l'une au moins des revendications 1 à 6, **caractérisé en ce que** les empreintes concaves (2) s'étendent jusque plus près de la limite périphérique extérieure (P) du fond que du centre (C) de ce fond.

8. Article culinaire selon l'une des revendications 1 à 7, **caractérisé en ce que** la paroi de fond est en aluminium, et l'aluminium appartient aux familles 1000, 3000, 4000 ou 5000.

9. Article culinaire selon l'une des revendications 1 à 8, **caractérisé en ce que** la paroi de fond a une épaisseur comprise entre 2 et 5 mm.

10. Article culinaire selon l'une des revendications 1 à 9, **caractérisé en ce que** chaque empreinte (2) est disjointe des autres et a une profondeur comprise entre 0,2 et 1 mm.

11. Article culinaire selon l'une des revendications 1 à 10, **caractérisé en ce que** la surface inférieure (1) comporte un nombre impair d'empreintes (2) régulièrement réparties en couronne.

12. Article culinaire selon l'une des revendications 1 à 11, **caractérisé en ce que** les empreintes (2) sont disposées à la partie périphérique de la paroi de fond.

13. Article culinaire selon la revendication 12, **caractérisé en ce qu'**un insert (6) est fixé au centre de la surface inférieure (1) de la paroi de fond.

14. Article culinaire selon la revendication 13, **caractérisé en ce que** l'insert (6) a une forme d'étoile.

15. Article culinaire selon la revendication 14, **caractérisé en ce que** le nombre de branches (7) définissant la forme en étoile de l'insert (6) est égal au nombre d'empreintes (2) réalisées sur la paroi de fond.

16. Article culinaire selon la revendication 15, **caractérisé en ce que** les différentes branches (7) de l'insert (6) présentent des axes de symétrie (8) formant les bissectrices des axes (3) des empreintes (2).

17. Article culinaire selon l'une des revendications 13 à 16, **caractérisé en ce que** l'insert (6) a une épaisseur comprise entre 0,2 et 0,8 mm.

18. Article culinaire selon l'une des revendications 13 à 17, **caractérisé en ce que** l'insert (6) est soit en cuivre, soit en acier inoxydable austénitique.

## Patentansprüche

1. Kochgefäß mit einer Bodenwand, die eine einheitliche obere Fläche und eine untere Fläche (1) hat, die konkave Vertiefungen (2) umfasst, **dadurch gekennzeichnet, dass** jede Vertiefung (2) aus zwei radialen Ästen (3a) und einem mittleren Ast (4) besteht, der die beiden radialen Äste (3a) verbindet, wobei jede Vertiefung so je nach der Länge des mittleren Asts allgemein U- oder V-förmig ist.

2. Kochgefäß mit einer Bodenwand, die eine einheitliche obere Fläche und eine untere Fläche (1) hat, die konkave Vertiefungen (2) ohne Einsätze umfasst, **dadurch gekennzeichnet, dass** jede Vertiefung (2) von den anderen getrennt ist und ausschließlich zwei radiale Äste (3a) und einen mittleren Ast (4) umfasst, der die beiden radialen Äste (3a) verbindet.

3. Kochgefäß nach Anspruch 1 oder 2, **dadurch gekennzeichnet, dass** jede Vertiefung (2) von den anderen getrennt und ganz von einer nicht ausgehöhlten Zone (14) der unteren Fläche (1) umgeben ist, die
- für diese untere Fläche (1) eine Stützfläche auf einer darunterliegenden Fläche (16) definiert, die sich in einer Ebene erstreckt, und/oder
- sich einheitlich auf derselben Höhe um die Vertiefung (2) herum erstreckt.

4. Kochgefäß nach mindestens einem der vorhergehenden Ansprüche, **dadurch gekennzeichnet, dass** der mittlere Ast (4) ein kreisbogenförmiger Ast ist, dessen Mitte die Mitte der Bodenwand ist, und/oder der mittlere Ast (4) jeder Vertiefung (2) von den anderen getrennt und in der Richtung der Mitte der Bodenwand ausgerichtet ist.

5. Kochgefäß nach mindestens einem der vorhergehenden Ansprüche, **dadurch gekennzeichnet, dass** jede Vertiefung (2) von den anderen getrennt ist und eine radiale Symmetrieachse (3) aufweist, die durch die Mitte des mittleren Asts (4) geht.

6. Kochgefäß nach mindestens einem der Ansprüche 1 bis 5, **dadurch gekennzeichnet, dass** der mittlere Ast (4) eine andere Breite als das freie Ende (5) der beiden radialen Äste (3a) hat und der mittlere Ast (4) breiter als die freien Enden (5) ist und höchstens viermal so breit ist.

7. Kochgefäß nach mindestens einem der Ansprüche 1 bis 6, **dadurch gekennzeichnet, dass** sich die konkaven Vertiefungen (2) bis näher zu der äußeren Umfangsgrenze (P) des Bodens erstrecken als zu der Mitte (C) dieses Bodens.

8. Kochgefäß nach einem der Ansprüche 1 bis 7, **dadurch gekennzeichnet, dass** die Bodenwand aus Aluminium ist und das Aluminium zu der 1000-, 3000-, 4000- oder 5000-Reihe gehört.

9. Kochgefäß nach einem der Ansprüche 1 bis 8, **dadurch gekennzeichnet, dass** die Bodenwand eine Dicke zwischen 2 und 5 mm hat.

10. Kochgefäß nach einem der Ansprüche 1 bis 9, **dadurch gekennzeichnet, dass** jede Vertiefung (2) von den anderen getrennt ist und eine Tiefe zwischen 0,2 und 1 mm hat.

11. Kochgefäß nach einem der Ansprüche 1 bis 10, **dadurch gekennzeichnet, dass** die untere Fläche (1) eine ungerade Zahl von Vertiefungen (2) umfasst, die regelmäßig kranzförmig verteilt sind.

12. Kochgefäß nach einem der Ansprüche 1 bis 11, **dadurch gekennzeichnet, dass** die Vertiefungen (2) im Umfangsteil der Bodenwand angeordnet sind.

13. Kochgefäß nach Anspruch 12, **dadurch gekennzeichnet, dass** ein Einsatz (6) in der Mitte der unteren Fläche (1) der Bodenwand befestigt ist.

14. Kochgefäß nach Anspruch 13, **dadurch gekennzeichnet, dass** der Einsatz (6) sternförmig ist.

15. Kochgefäß nach Anspruch 14, **dadurch gekennzeichnet, dass** die Zahl von Ästen (7), die die Sternform des Einsatzes (6) definieren, der Zahl von in der Bodenwand ausgeführten Vertiefungen (2) entspricht.

16. Kochgefäß nach Anspruch 15, **dadurch gekennzeichnet, dass** die verschiedenen Äste (7) des Einsatzes (6) Symmetrieachsen (8) aufweisen, die Winkelhalbierende der Achsen (3) der Vertiefungen (2) bilden.

17. Kochgefäß nach einem der Ansprüche 13 bis 16, **dadurch gekennzeichnet, dass** der Einsatz (6) eine Dicke zwischen 0,2 und 0,8 mm hat.

18. Kochgefäß nach einem der Ansprüche 13 bis 17, **dadurch gekennzeichnet, dass** der Einsatz (6) entweder aus Kupfer oder aus austenitischem Edelstahl ist.

## Claims

1. Cooking utensil having a bottom wall having a uniform upper surface and a lower surface (1) comprising concave indentations (2), **characterized in that** each indentation (2) consists of two radial branches (3a) and of one central branch (4) connecting the two radial branches (3a), each indentation therefore having the general shape of a U or of a V depending on the length of the central branch.

2. Cooking utensil having a bottom wall having a uniform upper surface and a lower surface (1) comprising concave indentations (2) with no insert therein, **characterized in that** each indentation (2) is separated from the others and comprises exclusively two radial branches (3a) and one central branch (4) connecting the two radial branches (3a).

3. Cooking utensil according to Claim 1 or 2, **characterized in that** each indentation (2) is separated from the others and is entirely surrounded by an unhollowed zone (14) of the lower surface (1) which
- defines, for this lower surface (1), a surface for resting on an underlying surface (16) extending in a plane, and/or
- extends uniformly at one and the same level around the said indentation (2).

4. Cooking utensil according to at least one of the preceding claims, **characterized in that** the central branch (4) is a circularly arcuate branch of which the centre is the centre of the bottom wall, and/or the central branch (4) of each indentation (2) is separated from the others and is oriented in the direction of the centre of the bottom wall.

5. Cooking utensil according to at least one of the preceding claims, **characterized in that** each indentation (2) is separated from the others and has a radial axis of symmetry (3) passing through the centre of the central branch (4).

6. Cooking utensil according to at least one of Claims 1 to 5, **characterized in that** the width of the central branch (4) is different from that of the free end (5) of the two radial branches (3a), and the width of the central branch (4) is greater than that of the free ends (5) and is at most four times wider.

7. Utensil according to at least one of Claims 1 to 6, **characterized in that** the concave indentations (2) extend to closer to the outer peripheral limit (P) of the bottom than the centre (C) of this bottom.

8. Cooking utensil according to one of Claims 1 to 7, **characterized in that** the bottom wall is made of aluminium and the aluminium belongs to the families 1000, 3000, 4000 or 5000.

9. Cooking utensil according to one of Claims 1 to 8, **characterized in that** the bottom wall has a thickness of between 2 and 5 mm.

10. Cooking utensil according to one of Claims 1 to 9, **characterized in that** each indentation (2) is separated from the others and has a depth of between 0.2 and 1 mm.

11. Cooking utensil according to one of Claims 1 to 10, **characterized in that** the lower surface (1) comprises an uneven number of indentations (2) evenly distributed in a ring.

12. Cooking utensil according to one of Claims 1 to 11, **characterized in that** the indentations (2) are placed at the peripheral portion of the bottom wall.

13. Cooking utensil according to Claim 12, **characterized in that** an insert (6) is attached to the centre of the lower surface (1) of the bottom wall.

14. Cooking utensil according to Claim 13, **characterized in that** the insert (6) is star-shaped.

15. Cooking utensil according to Claim 14, **characterized in that** the number of branches (7) defining the star shape of the insert (6) is equal to the number of indentations (2) made on the bottom wall.

16. Cooking utensil according to Claim 15, **characterized in that** the various branches (7) of the insert (6) have axes of symmetry (8) forming the bisecting lines of the axes (3) of the indentations (2).

17. Cooking utensil according to one of Claims 13 to 16, **characterized in that** the insert (6) has a thickness of between 0.2 and 0.8 mm.

18. Cooking utensil according to one of Claims 13 to 17, **characterized in that** the insert (6) is made either of copper or of austenitic stainless steel.
